# EUROPEAN PATENT APPLICATION

(11) **EP 2 551 936 A2**
(43) Date of publication of application: **30.01.2013**
(21) Application number: 12176824.6
(22) Date of filing: 18.07.2012
(51) Int. Cl.: H01M 2/10, H01M 2/20, H01M 2/34

(54) **Electrochemical device and method for its assembly**

(30) Priority: 25.07.2011 US 201113189867
(71) Applicant: General Electric Company, Schenectady, NY 12345 (US)
(72) Inventor: Kalish, Peter, Schenectady, NY 12345 (US); Shah, Kashyap, Schenectady, NY 12345 (US); Frutschy, Kristopher, Schenectady, NY 12345 (US); Towle, Stuart, Schenectady, NY 12345 (US); Browell, James, Schenectady, NY 12345 (US); Bull, Roger, Schenectady, NY 12345 (US); Kumar, Ajith Kuttannair, Schenectady, NY 12345 (US); Marley, Michael Patrick, Schenectady, NY 12345 (US); Butine, John D., Schenectady, NY 12345 (US); Ellsworth, Harold Alan, Schenectady, NY 12345 (US); Donner, John L., Schenectady, NY 12345 (US); Pelkowski, Stephen, Schenectady, NY 12345 (US); Quirion, Owen Scott, Schenectady, NY 12345 (US); Johnson, Neil A, Schenectady, NY 12345 (US)
(74) Representative: Illingworth-Law, William Illingworth

(57) **Abstract**

An electrochemical device (19) is disclosed that includes a plurality of cells (14) that each include a face (94), wherein a terminal (50,52) is disposed on the faces (94) of each respective cell (14). A bus bar (48) has a bus bar height and electrically couples the terminals (50,52) from cell-to-cell within the electrochemical device (19). A plurality of sheets (74) are disposed between the plurality of cells (14), the plurality of sheets (74) are substantially the same height as the combined height of each cell(14) and bus bar (48).

## Description

### BACKGROUND

### TECHNICAL FIELD

The invention includes embodiments that relate to batteries and, more particularly, to mechanical packaging of battery internal components.

### DISCUSSION OF ART

Batteries are useful to store energy. Battery operating environments may be relatively harsh for several reasons, including changes in environmental operating temperature, extended mechanical vibrations, and the existence of corrosive materials.

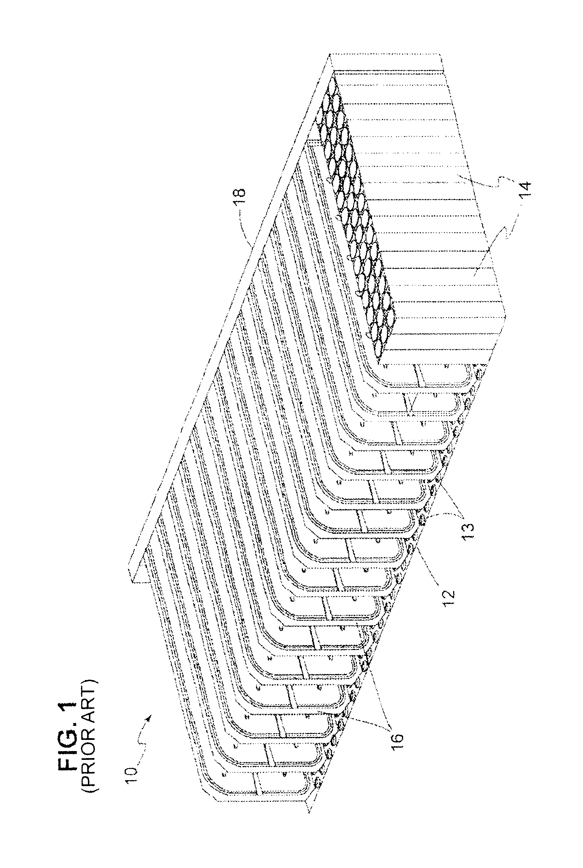

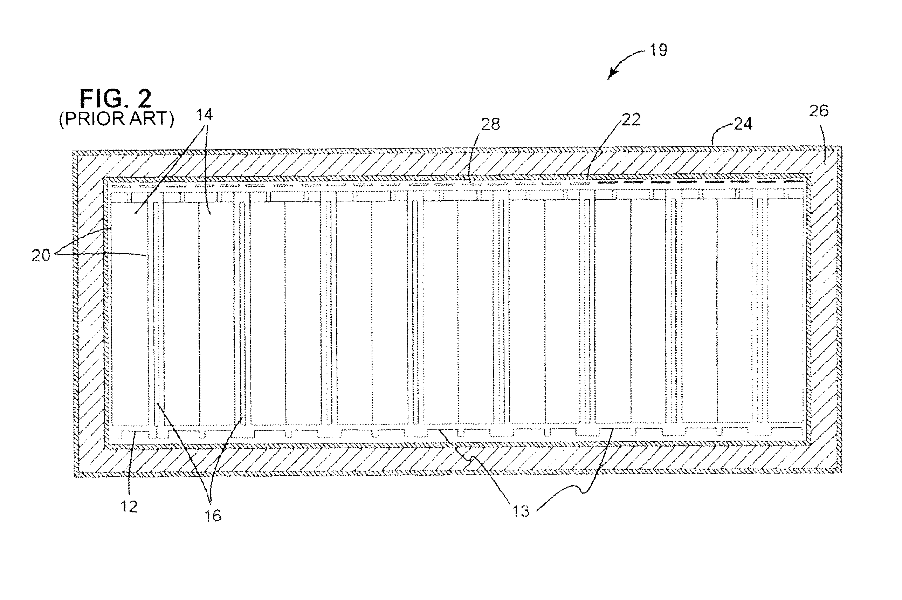

FIG. 1 illustrates an inner assembly 10 of a conventional battery 19 and FIG. 2 shows a cross-sectional view of the conventional battery 19 having the inner assembly 10 of FIG. 1. As illustrated, the inner assembly 10 of the conventional battery 19 includes a base plate 12, also known as a button sheet, having a plurality of buttons or protrusions 13 configured to support a plurality of cells 14 electrically connected to each other by a plurality of bus bars (not shown). Separating groups of cells 14, a plurality of cooling ducts or plates 16 supplied with air from a cooling header 18 maintains the cells 14 within a desired operating temperature range. FIG. 1 is presented herein to show components of the conventional battery, including only a small number of cells for better clarity of the other features illustrated and described, and should not be considered as an illustration of a commercial product.

As illustrated in FIG. 2, sheets 20 are packed between adjacent cells 14 so as to electrically insulate the cells 14 from each other and from the mechanical packaging of the conventional battery 19. The mechanical packaging of the conventional battery 19 also includes an inner housing 22, which envelops the inner assembly 10, separated from an outer housing 24 by a layer of insulation material 26. The space between the inner housing 22 and the outer housing 24 is evacuated in order to minimize heat transfer to and/or from the battery 19. A heater 28 is provided to raise the temperature of the battery to a desired operating level.

Mechanical vibrations may cause relative motion of the sheets 20 and the cells 14 with respect to each other, leading to loss in electrical connection between cells due to bus bar failures, electrical creep, and/or strike failures due to tight spaces, and damage of the mechanical and insulating property of the sheets. Potential technological challenges may include: creep and strike failures due to electrical isolation material separation; high energy, low frequency cell resonance due to a flexible base; large cell translations due to resonant cell response; mechanical failure of the joint between base plate and cooling duct, internal cell damage (hot cells), bus bar fractures, internal battery case damage, and heater sheet cracking and punctures due to large cell translation; vacuum loss due to internal battery case damage; loss of heater continuity due to heater sheet cracking and punctures; loss of ability to maintain proper battery temperature due to loss of heater continuity; loss of cell conductivity (and/or proper operation) damage to the inter-cell separator seal due to internal cell damage; and leaking of liquid sodium due to inter-cell separator seal damage.

It would therefore be desirable to develop a battery with features and characteristics that differ from those of batteries that are currently available.

### BRIEF DESCRIPTION

In an embodiment, an electrochemical device is provided that includes a first cell, a second cell, first and second terminals, a bus bar, and a sheet. The first cell has a first face and a cell height, and the second cell includes a second face. The first terminal is disposed on the first face of the first cell, and the second terminal is disposed on the second face of the second cell. The bus bar has a bus bar height, and electrically couples the first terminal on the first cell to the second terminal on the second cell. The sheet is disposed between the first cell and the second cell, and the sheet has at least a portion that has a height that is at least as high as the combined height of the cell height and the bus bar height.

In an embodiment, a method includes disposing a notched sheet between adjacent cells within a housing; and placing a bus bar through the notch to electrically couple the adjacent cells to each other.

In an embodiment, an assembly is provided for insulating cells within an electrochemical device. The assembly includes a plurality of walls that each have a height that is greater than a height of the cells. Each wall defines a plurality of slots disposed at a determined interval along the length of the wall, wherein the interval is based at least in part on a width of the cells. Two or more of the walls are interlockable with each other by aligning and interlocking the slots of one of the two or more walls with another of the two or more walls.

### BRIEF DESCRIPTION OF THE DRAWINGS

Reference is made to the accompanying drawings in which particular embodiments of the invention are illustrated as described in more detail in the description below, in which:
FIG. 1 is a perspective view of an inner assembly of a conventional battery;
FIG. 2 is a cross-sectional view of a conventional battery having the inner assembly of FIG 1;
FIG. 3 is an embodiment of the disclosed invention, including a cross-sectional view (FIG. 3A) taken along a cooling duct of the battery and front (FIG. 3B) and perspective views of the illustration shown in FIG. 3A;
FIG. 4 is a perspective view disclosing one embodiment of the disclosed invention;
FIG. 5 is a perspective view disclosing one embodiment of the disclosed invention;
FIG. 6 is a cross-sectional view taken along a cooling duct of the battery disclosing one embodiment;
FIG. 7 shows added beam sections in the form of ribs (FIG. 7A) or a plate (FIG. 7B) connected to an inner housing of the battery;
FIG. 8 is a perspective view of an end portion of a battery cell disclosing one embodiment;
FIG. 9 is a cross-sectional view taken along electrical connectors of adjacent cells disclosing one embodiment, including a sheet of an electrically insulating material disposed on top of the cells extending along a direction substantially parallel to the bus bar (FIG. 9A), on top of the cells in a direction substantially parallel to the bus bar (FIG. 9B), and under the bus bar in a direction substantially transversely to that of the bus bar (FIG. 9C);
FIG. 10 discloses sheets disposed on top and bottom portions of the cells, the sheet disposed on the top portion of the cell having an integrated bus bar with electrical connections made by contact pressure;
FIG. 11 discloses a sheet disposed on a top portion of the cells, the sheet having an integrated bus bar with electrical connections made by a mechanical interference fit;
FIG. 12 discloses adjacent sheets and cells with roughened and/or corrugated surfaces in the form of complementary undulations (FIG. 12A) and protrusions and depressions (FIG. 12B);
FIG. 13 discloses a biasing member compressing the cells, sheets, and/or cooling plates against an inner housing of the battery;
FIG. 14 discloses a belt or wrap disposed around cells, sheets, and/or cooling plates of the battery;
FIG. 15 discloses sheets (FIG. 15A) and/or cooling ducts (FIG. 15B) of variable geometry;
FIG. 16 discloses sheets and/or cells (FIG. 16A) and cooling ducts and/or cells (FIG. 16B) of variable geometry;
FIG. 17 discloses cells that mechanically connected to a button sheet;
FIG. 18 discloses cell geometry to integrate a bottom portion of the cell into an insulated button sheet;
FIG. 19 discloses an extended length sheet that is notched to accommodate a bus bar;
FIG. 20 discloses a plurality of extended length sheets that are disposed around cells in a battery;
FIG. 21 discloses a plurality of bus bars are used to interconnect cells across sheet notches in a battery;
FIG. 22 discloses that a profile of one battery is substantially homogenous in accordance with an embodiment;
FIG. 23 discloses a cooling channel is located between a top sheet and cells of a battery;
FIG. 24 discloses a plurality of support structures are disposed between the cells and top sheet;
FIG. 25 discloses the support structures that are coupled to the top sheet;
FIG. 26 discloses that the sheets are coupled in a collapsible structure;
FIG. 27 discloses that the collapsible structure is open to create compartments that each accommodate a cell; and
FIG. 28 discloses cells that are disposed within the collapsible structure.

### DETAILED DESCRIPTION

The invention includes embodiments that relate to electrochemical devices and, more particularly, to mechanical packaging of battery internal components. With reference to the drawings, wherein like reference numerals designate identical or corresponding parts throughout the several views, several embodiments of the disclosed high-temperature battery will be described, including embodiments related to inner-assembly stiffening, battery-case stiffening, restriction of vertical cell motion, or combinations thereof.

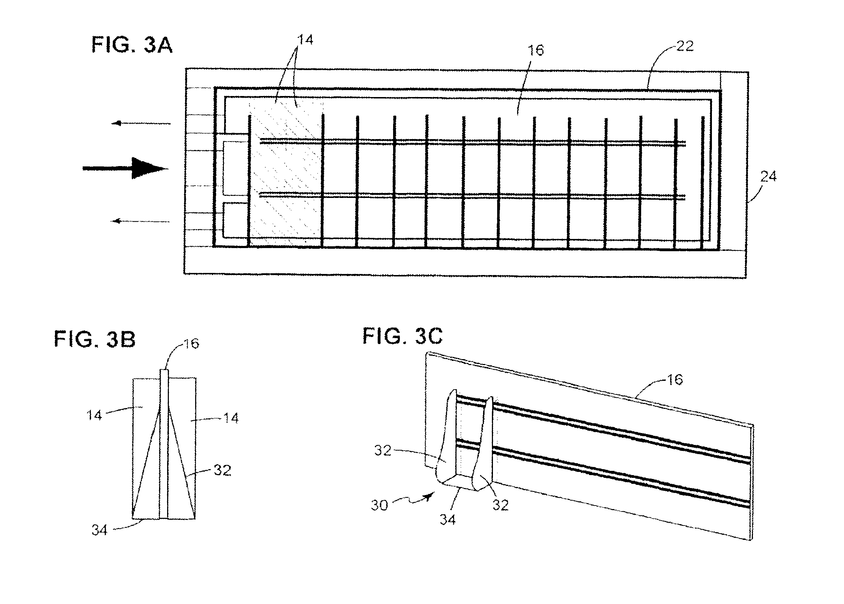

FIGS. 3-5 illustrate different embodiments related to making the inner assembly of a high-temperature battery stiffer. FIG. 3 illustrates the first embodiment, which includes the use of a plurality of joist hangers 30 to suspend the cells from a cooling duct or plate 16. FIG. 3 includes a cross-sectional view taken along a cooling duct of the battery (FIG. 3A) and front (FIG. 3B) and perspective (FIG. 3C) views of the illustration shown in FIG. 3A. As shown, the joist hangers 30 include vertically extending stirrups 32 attached to the cooling duct 16. Between adjacent stirrups 32, a base support 34 is disposed to provide support for the individual battery cells support by each joist hanger 30. In some instances, one base support 34 may be used to support more than one cell 14, while providing less stiffness to areas of the inner assembly where less mechanical vibration is expected. While a joist hanger 30 to support more than one cell 14 is contemplated in one embodiment, a joist hanger 30 per cell 14 may be used as illustrated in FIG. 3. The joist hangers 30 may be attached to the cooling plate 16 made of a suitable material, thus eliminating the need to provide a button sheet while providing stiffer support for each cell and a stiffer inner assembly from front to back. In one embodiment, the joist hangers 30 include protrusions that are inserted in grooves provided in the cooling plates 16, as shown in FIG. 3.

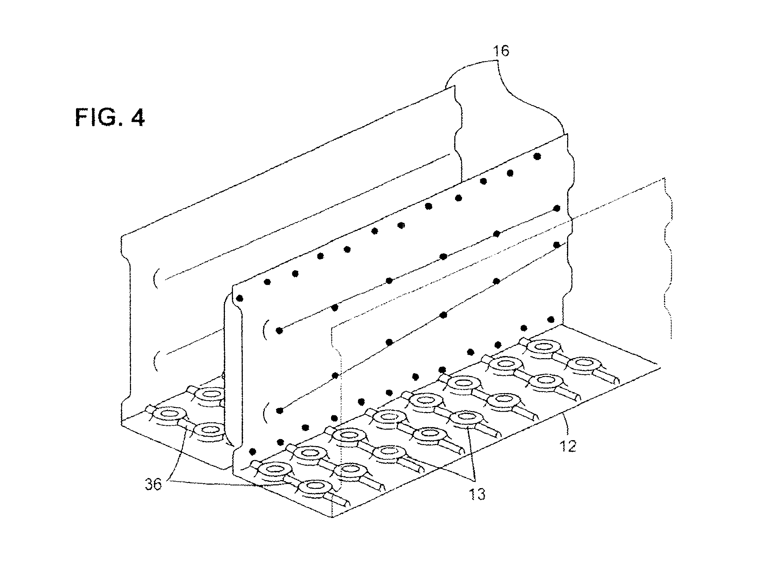

FIG. 4 illustrates another embodiment of the inner assembly 10 according to the disclosed invention. As shown, beam sections 36 are formed into the button sheet 12 between the buttons 13 in order to stiffen the inner assembly of the battery and to provide a stiffer support for the button sheet 12. In one form of this embodiment, the beam sections 36 are disposed in a direction substantially perpendicular to the cooling plates 16, as illustrated in FIG. 4; however, these beam sections 36 may also be disposed diagonally or in combination connecting the buttons 13. The selection of the distribution may be based at least in part by application specific parameters. In addition, the cross-sectional shape of each beam section 36 may be, for example, but not as a limitation, triangular, square, or elliptical, and may be selected as to maximize the overall stiffness of the button sheet 12 and manufacturing ease.

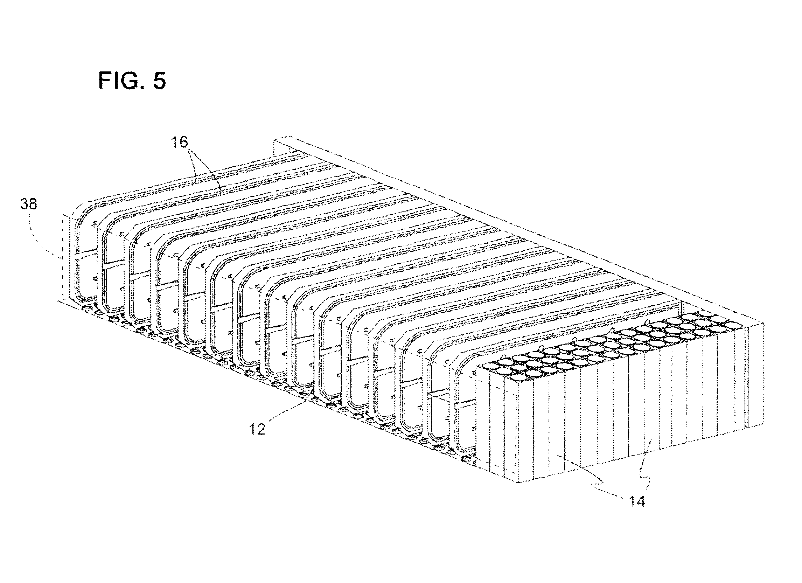

FIG. 5 illustrates one embodiment of the disclosed invention configured to stiffen the inner assembly of a hybrid battery. As shown, this embodiment includes the use of an interconnecting or brace member 38 configured to connect the cooling ducts 16 at the backside of the battery. Variation of this embodiment may include fastening the interconnecting element 38 to the button sheet 12 and/or to both the button sheet 12 and the cooling ducts 16. Several different embodiments of the interconnecting element 38 are within the scope of the disclosed invention, including, but not being limited to, a strap, a band, a wire, a spring, and/or a metal sheet (flat or formed). The interconnecting element 38 is configured to allow for more support of the button sheet 12, particularly if the same is fastened thereto using a high-integrity joint. In addition to the use of the interconnecting element 38, or in the alternative, increasing the thickness of both the cooling ducts 16 and of the button sheet 12 and/or to make such connection more continuous, may increase the rigidity of the attachment of the cooling ducts 16 to the button sheet 12, thus stiffening the inner assembly of the battery, providing a more rigid support for the button sheet 12 as the thickness of the cooling plate 16 and button sheet 12 is increased, and limiting the vertical motion of the cells 14.

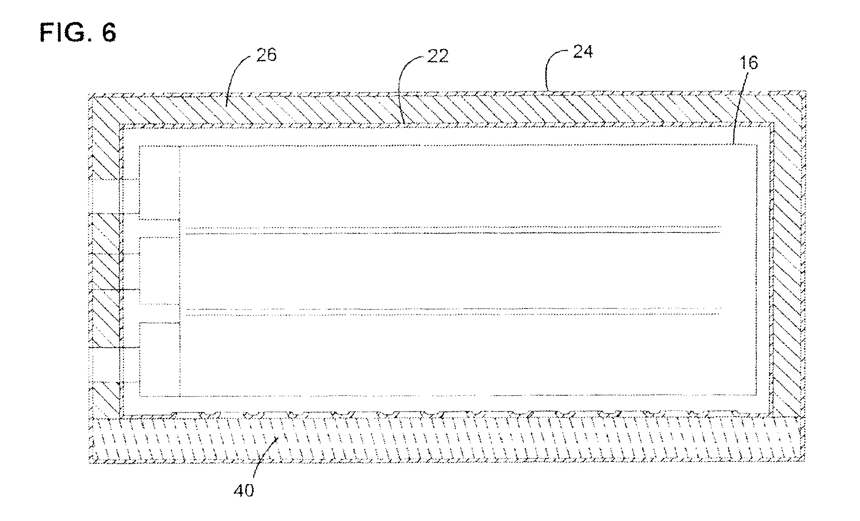

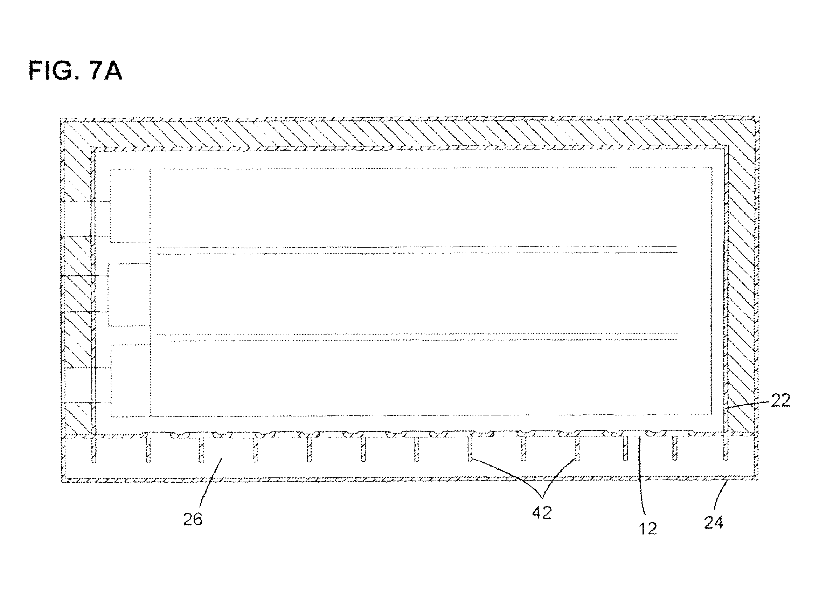

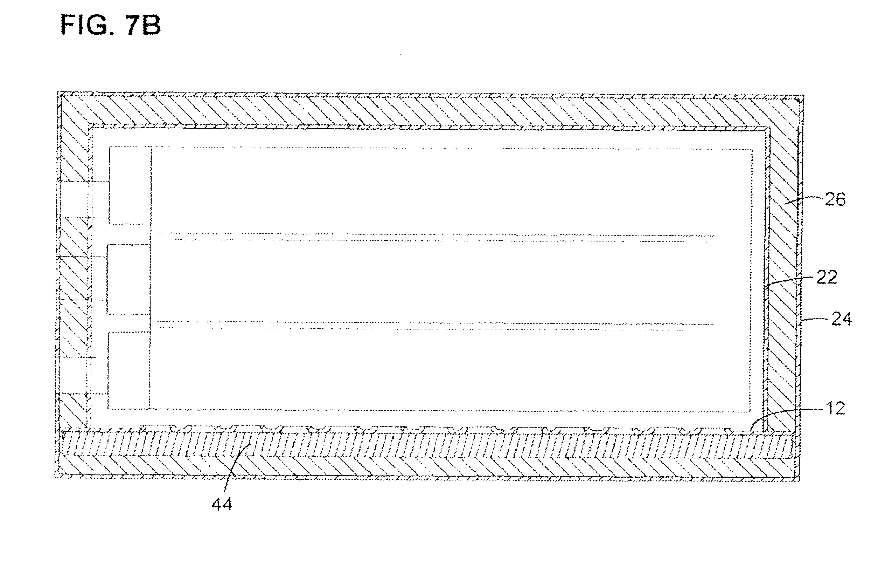

FIGS. 6 and 7 illustrate several embodiments of the disclosed invention configured to make the battery case stiffer and, thus, reduce damage thereto caused by relative motion of one or more of the different components of the battery due to mechanical vibration during use. FIG. 6 illustrates a cross-sectional view taken along the cooling plate 16 of an embodiment that includes the use of a firebrick 40 between the inner housing 22 and the outer housing 24 to support the button sheet 12. The firebrick 40 may be a continuous piece, as illustrated in FIG. 6, or it may be discrete pieces (not shown) disposed along the bottom of the button sheet 12. The firebrick 40 may provide a relatively stiff surface below the button sheet 12, thereby increasing the amount of pressure that can be applied to the battery case and making the inner housing 22 less flexible.

FIG. 7 illustrates one embodiment of the disclosed invention configured to stiffen the battery case. In this embodiment, added beam sections in the form of ribs 42 (FIG. 7A) or a plate 44 (FIG. 7B) are connected to the inner housing 22. As shown in FIGS. 7A and 7B, the ribs 42 or plate 44 are connected to the inner housing 22 so as to protrude into the insulation material 26, resulting in a stiffer inner housing 22 and providing an improved support for the button sheet 12. The ribs 42 and plate 44 may be connected to the inner housing 22 in a plurality of ways, including, but not being limited to, by welding. Alternatively, the ribs 42 and plate 44 may be connected or attached to the outer housing 24 so as to protrude into the insulation material 26. In this alternative embodiment, a stiffer outer housing 24 is obtained which can better withstand the addition of other fixtures thereto, allow for less overall deflection of the battery case, and provide a more rigid support for the inner assembly of the battery. In the embodiments discussed herein in relation to FIG. 7, the number and location of the ribs 42 and plate 44 may vary according to the desire to control the localized and/or overall stiffness of the battery case. As such, a rib 42 may be disposed below each button 13 of the button sheet 12 or discretely dispersed in any order or pattern as needed to provide the desired effect.

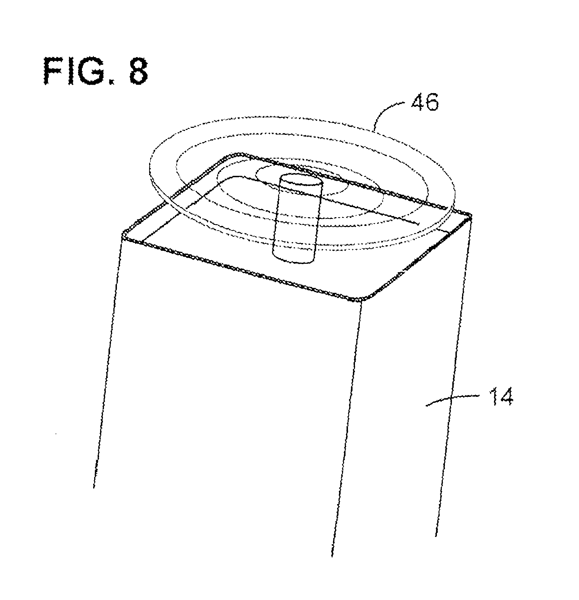

FIGS. 8-25 illustrate several embodiments of the disclosed invention configured to restrict vertical motion of the cells 14, thus reducing damage thereto due to mechanical vibration during use. In the first of such embodiments, as illustrated in FIG. 8 in the perspective view of an end portion of the cell 14, a biasing member 46 is disposed on the top portion of the cell 14, thereby providing a compressive load from the inner housing 22 (not shown) to the cell 14. The biasing member 46 may be in the form of a compressive disc (as illustrated) or in the form of a spring (not shown). Adding the biasing member 46 to the top portion of each cell will reduce and/or eliminate the gap between the cells 14 and the inner housing 22, thereby providing a way to control a spring rate of individual cells and minimizing the relative motion of one cell with respect to another. As used herein, the spring rate of individual cells relates to the rate of motion of a cell 14 due to a spring force or stiffness generated by the cell itself and the surrounding cells. In some instances, a biasing member 46 may be disposed on top of discrete cells 14 in the battery, while providing less restriction to the vertical motion of the cells 14 in areas where the expectation of vertical motion is reduced. Thus, while a biasing member 46 disposed discretely on top of cells 14 is within the scope of the present invention, a biasing member 46 per cell 14 is also contemplated.

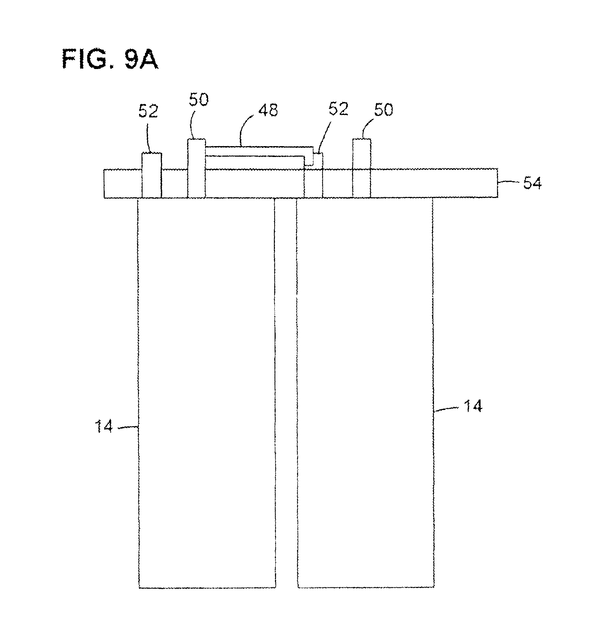

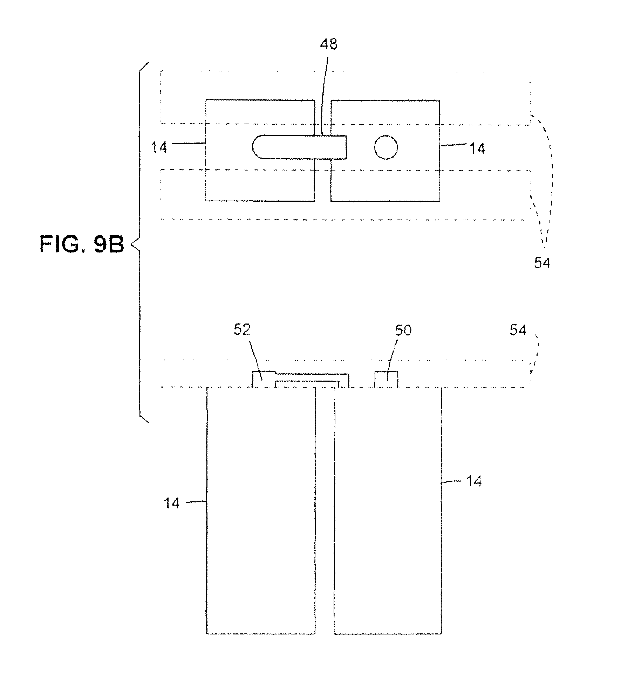

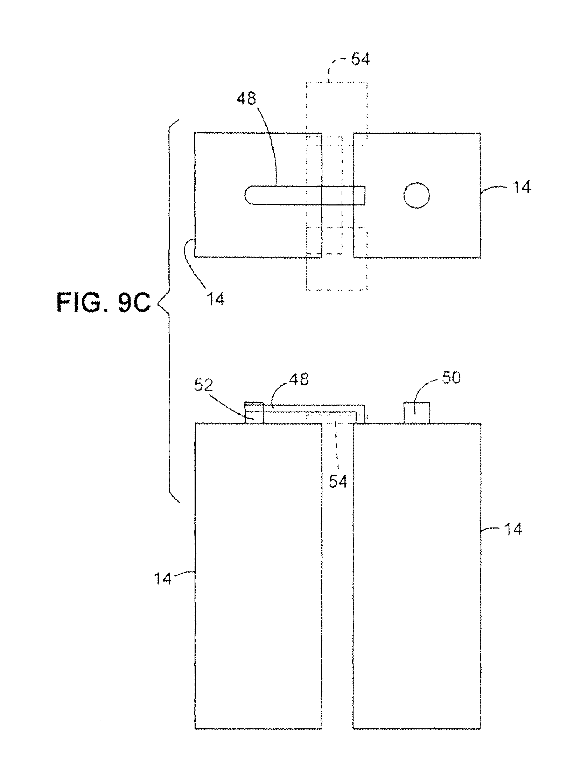

FIGS. 9A-9C illustrate various embodiments configured to restrict and/or limit vertical motion of the cells relative to each other associated with the use of a sheet of an electrically insulating material disposed over the top of the cell in various configurations designed to clamp down the cells. The embodiment of FIG. 9A includes a sheet 54 of electrically insulating material disposed on top of the cells 14 such that the battery terminals 50 and 52 protrude through the sheet 54 and are connected to each other by the bus bar 48 disposed above the sheet 54. The orientation and the number of sheets 54 to be used may be dependent on the amount of localized amount of vertical motion of the cells to be minimized. As illustrated in FIG. 9A, the sheet 54 extends along a direction substantially parallel to the bus bar 48 and includes openings on the surface in contact with the cells 14 to receive the top portions of the cells. As the sheet 54 clamps down the cells, the spring rate of the cells is better controlled, thereby limiting the relative motion of the cells with respect to each other. The sheet 54 may be supported on the inner housing of the battery and/or on the cooling ducts, and may be made of mica, ceramic, or silicone ceramic. In the embodiment of FIG. 9B, as shown in the illustrated side and top views, the sheet 54 of insulating material is disposed on top of the cells 14 in a direction substantially parallel of the bus bar 48 so as to leave the electrical terminals 50 and 52 and the bus bar 48 connecting them exposed. In the embodiment of FIG. 9C, the sheet 54 of insulating material is applied under the bus bar 48, extending along a direction substantially transversely to that of the bus bar 48. Embodiments that combine the features of FIG. 9B and 9C are also within the scope of the subject matter disclosed.

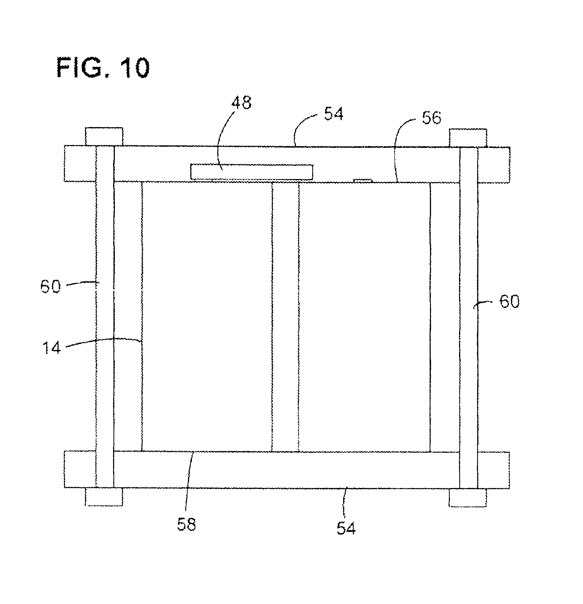

FIG. 10 illustrates one embodiment to restrict and/or limit vertical motion of the cells 14 relative to each other. In this embodiment, sheets 54 having the bus bar 48 integrated therein are applied to top portion 56 of the cells 14 so that no holes in the top sheet 54 are needed to accommodate the top portions of the cells 14 and similar sheets 54 without a bus bar 48 are applied to the bottom portion 58 of the cells. Electrical connections are made by contact pressure exerted by fasteners 60 connected to the sheets 54 applied to the top and bottom portions 56 and 58 of the cells 14. The embodiment of FIG. 10 permits the control of the relative motion of cells with respect to each other, and the elimination of the need for independent bus bars and for brazing the bus bar 48 to the battery electrical terminals 50 and 52. The integrated bus bar 48 of the embodiment shown in FIG. 10 may also be used without the fasteners 60 and the embodiment shown in FIG. 9 may also be used with fasteners 60 as explained with the embodiment illustrated in FIG. 10.

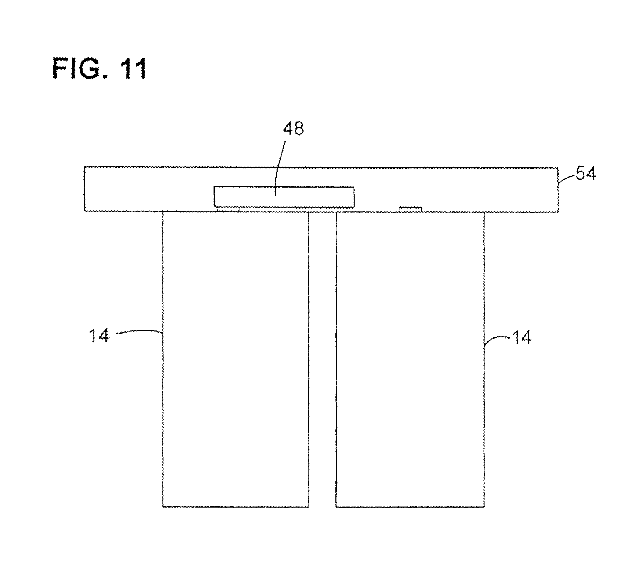

FIG. 11 illustrates one embodiment configured to limit and/or reduce vertical motion of the cells relative to each other. As shown, in the embodiment of FIG. 11, the sheet 54 incorporates an integrated bus bar 48 and the same is connected to the top of the cells and attached by a mechanical interference fit. This embodiment also permits the control of the relative motion of cells with respect to each other, and the elimination of the need for independent bus bars and for brazing the bus bar 48 to the battery electrical terminals 50 and 52. Variations of this embodiment could be achieved by having the sheet 54 (similar to FIG. 9A) only provide an interference fit so as to prevent relative motion.

In one embodiment configured to limit and/or reduce vertical motion of the cells relative to each other, an adhesive is applied to the side surfaces of the cells 14 so as to dampen cell motion. A suitable adhesive includes epoxy, cyanate ester, and/or varnish.

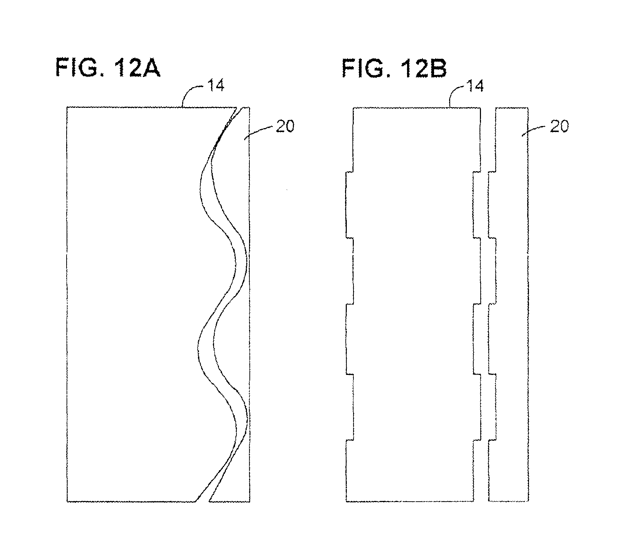

FIG. 12 illustrates one embodiment of the disclosed invention configured to prevent, dampen, and/or restrict vertical motion of the cells 14 relative to each other. As shown, in this embodiment, adjacent surfaces of the sheet 20 and cell 14 are roughened and/or corrugated so as to reduce the sliding tendency of each component with respect to the other. In FIG. 12A, the adjacent surfaces of the sheet 20 and the cell 14 include complementary undulations, which can have regular or irregular shapes. In FIG. 12B, the adjacent surfaces of the sheet 20 and the cell 14 include corresponding protrusions and depressions.

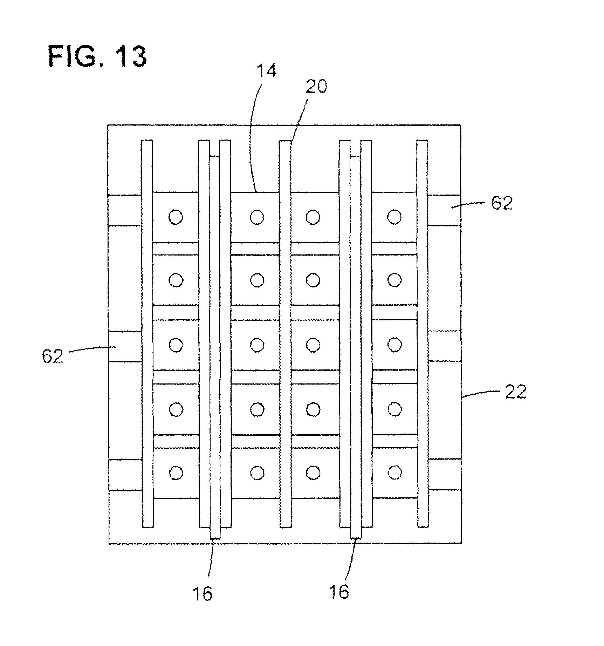

One embodiment configured to reduce relative vertical motion of the cells 14 and the sheet 20 with respect to one another is illustrated in FIG. 13. As shown, this embodiment includes compressing the cells 14, the sheets 20, and the cooling plates 16 from the inner housing 22 toward a central portion of the battery by use of biasing members 62 disposed against the inner housing 22. Examples of biasing members 62 include, but are not limited to, shims and springs. Compression is attained by having an over-constrained geometry. In other words, adding the biasing members applies a compressive load to the cell array and a tensile load to the battery case by geometric interference. The biasing members would be stiffer than the case material adjacent to them, thus not allowing the opposing members to separate freely, but instead to apply equal and opposite forces upon one another. The biasing members 62 will assist in dampening motion of the cells 14 vertically and may be applied with all existing materials.

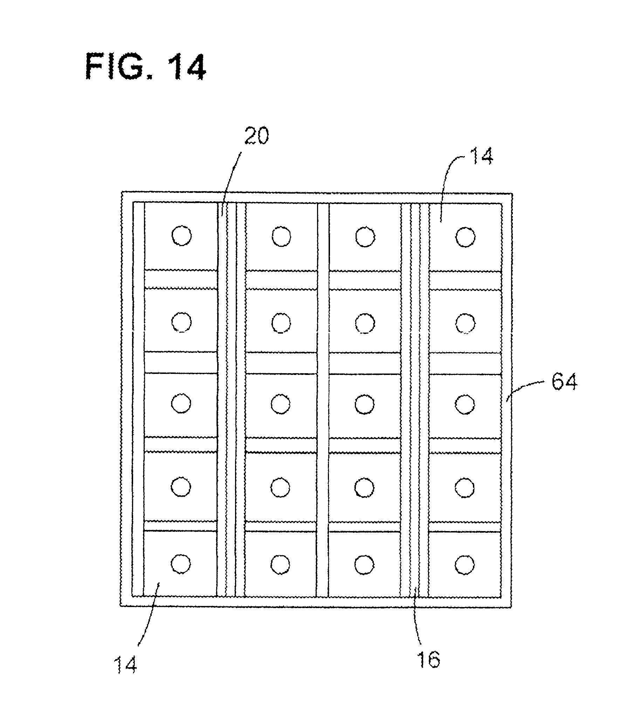

In one embodiment, the system is configured to reduce relative vertical motion of the cells 14 and sheet 20 with respect to one another is illustrated in FIG. 14. As shown, this embodiment includes wrapping the cells 14, the sheets 20, and the cooling plates 16 with a belt or a wrap 64. This provides a restraining force so that each cell has a lesser tendency to move vertically with respect to another adjacent cell.

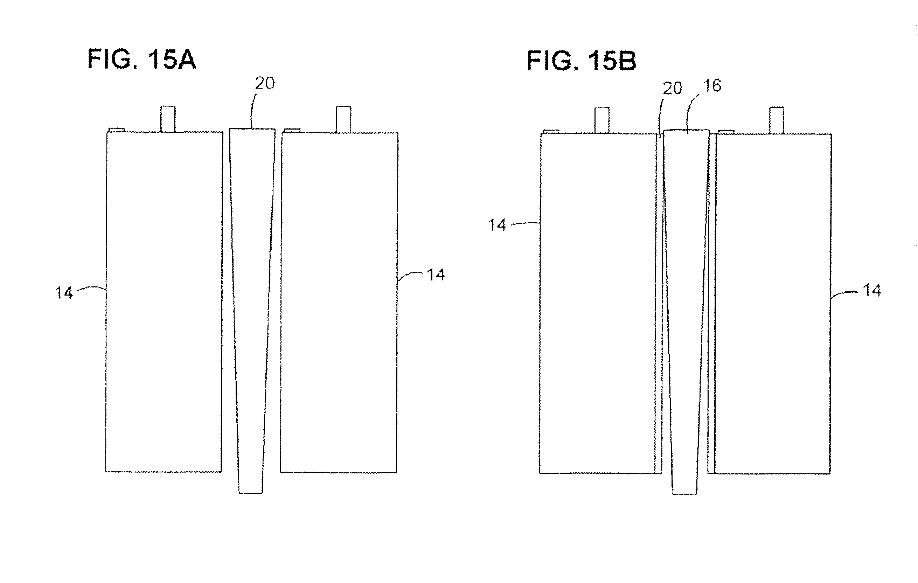

FIGS. 15A and 15B illustrate one embodiment configured to reduce relative vertical motion of the cells 14 with respect to each other, thus eliminating and/or reducing the tendency of the bus bars 48 to fail due to mechanical vibration with the battery is in use. As shown in FIG. 15, this embodiment includes the modification of the geometry of the sheets 20 (FIG. 15A) and/or the cooling ducts 16 (FIG. 15B) to be thicker at the top to prevent/resist upward cell motion, thereby dampening/restricting relative cell motion.

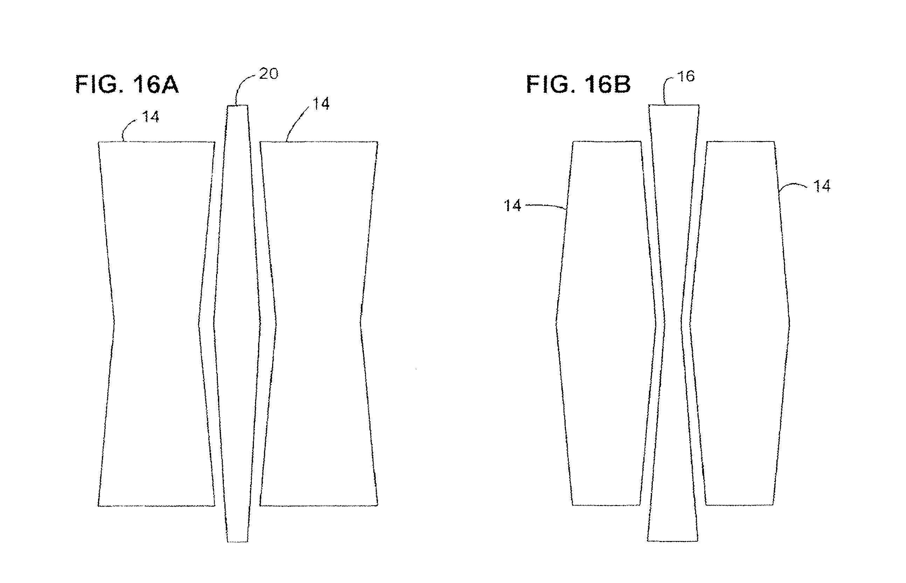

FIGS. 16A and 16B illustrate one embodiment configured to reduce relative vertical motion of the cells 14 with respect to each other, thus eliminating and/or reducing the tendency of the bus bars 48 to fail due to mechanical vibration with the battery is in use. As shown in FIG. 16, this embodiment includes the modification of the geometry of the cells 14 and sheets 20 (FIG. 16A) and/or of the cells 14 and the cooling ducts 16 (FIG. 16B) to prevent/dampen cell motion in a vertical direction. In this embodiment, a dimension characterizing a width or diameter of the cell 14 at a given location is modified such that that width or diameter is reduced or increased relative to the width or diameter at other portions of the cells 14 so as to create additional space between adjacent cells 14 while a corresponding dimension of the sheets is increased or reduced to accommodate the changes in the cell geometry.

As shown in FIG. 16A, in one example of this embodiment, a dimension characterizing a width or diameter of the cell 14 is modified such that, at substantially a central portion of the cells 14, that width or diameter is reduced relative to the width or diameter at the top and bottom portions of the cells 14 so as to create additional space between adjacent cells 14. The additional space created between adjacent cells 14 is then occupied by the sheets 20 having a larger width at the corresponding location where the width or diameter of the cells 14 is reduced, the width of the sheets 20 then decreasing from the central portion of the sheets 20 to the top and bottom portions thereof so as to match the shape of the cells 14.

As shown in the alternative embodiment of FIG. 16B, the dimension characterizing the width or diameter of the cells 14 is modified such that, at substantially a central portion of the cells 14, that width or diameter is increased relative to the width or diameter at the top and bottom of the cells 14 so as to create additional space between adjacent cells 14 at the top and bottom portions thereof. The additional space created between the adjacent cells 14 is then occupied by the cooling plates 16 having a larger width at the corresponding location where the width or diameter of the cells 14 is increased, the width of the cooling plates 16 then decreasing from the top and bottom portions so as to match the corresponding shape of the adjacent cells 14. FIG. 16 illustrates an example of the shapes of sheets, cells, and/or cooling plates. As indicated, these shapes do not have to be symmetrical. For example, only the cell could be made such that it is wider at the top. Or alternate cells could be made wider at the top and wider at the bottom.

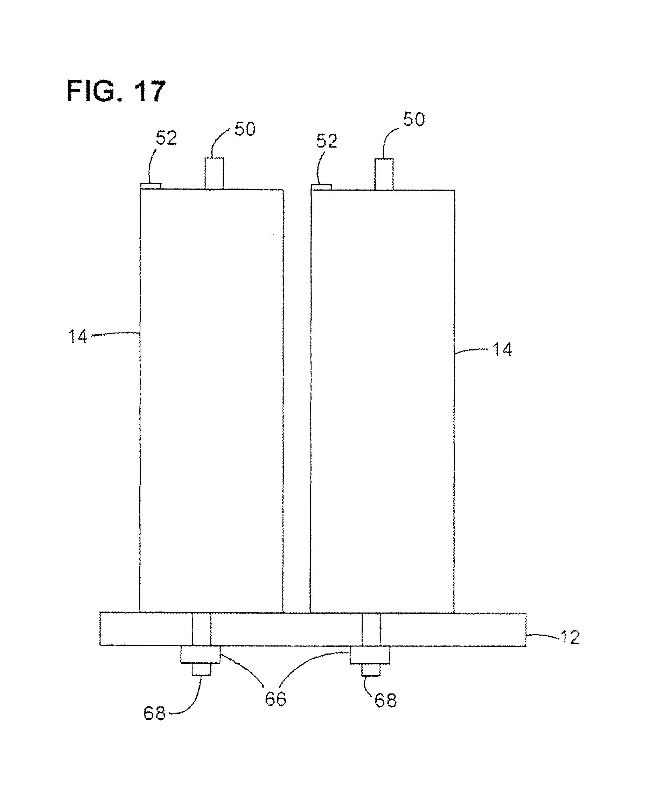

FIG. 17 illustrates one embodiment configured to reduce relative vertical motion of the cells with respect to each other, thus restricting vertical cell motion while, at the same time, providing stiffness to the inner assembly of the battery. As shown, this embodiment includes securing the bottom of the cells 14 to an insulated button sheet 12 by a mechanical connection, such as a bolted, riveted, welded, and/or brazed connection. In the illustration of FIG. 17, the bottom portion of the cells 14 includes a fastening member 68 that extends through an orifice in the insulated button sheet 12. A nut 66 is then used to fasten the fastening member 68 to the insulated button sheet 12.

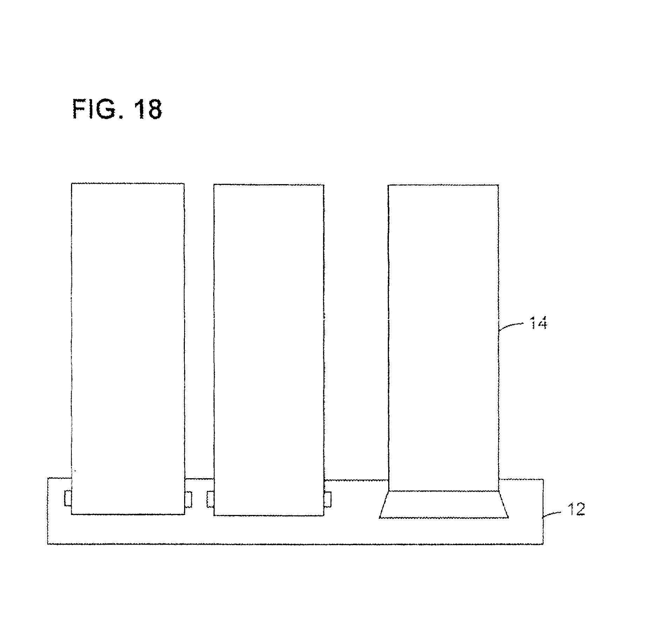

FIG. 18 illustrates one embodiment configured to reduce relative vertical motion of the cells with respect to each other, thus also restricting vertical cell motion while, at the same time, providing stiffness to the inner assembly of the battery. As shown, this embodiment includes a geometric modification of the portion of the cells 14 in contact with the insulated button sheet 12 so as to integrate or impregnate the former into the latter. This integration or impregnation process may be accomplished by use of an adhesive and/or a fastener. Suitable adhesives may include varnish and epoxy, while suitable fasteners may include a grooved connection or a dimpled connection between the bottom portions of the cells 4 and the insulated button sheets 12.

In the first illustration of FIG. 18, a projection may be created all around the cell, in the second, such projections are provided on in a few places (may be two hemispherical projections), and in the third illustration, the shape of the projection may be triangular and the cells could be slid or squeezed into it. Other variations could allow the cell and the inner assembly to define geometries such that the cell can be latched into place upon installation. Various styles of geometric discontinuities (protrusions) for the purpose of anchoring the cell bottom in a solidly formed base or protrusions could be on the base with corresponding dimples in the cell case.

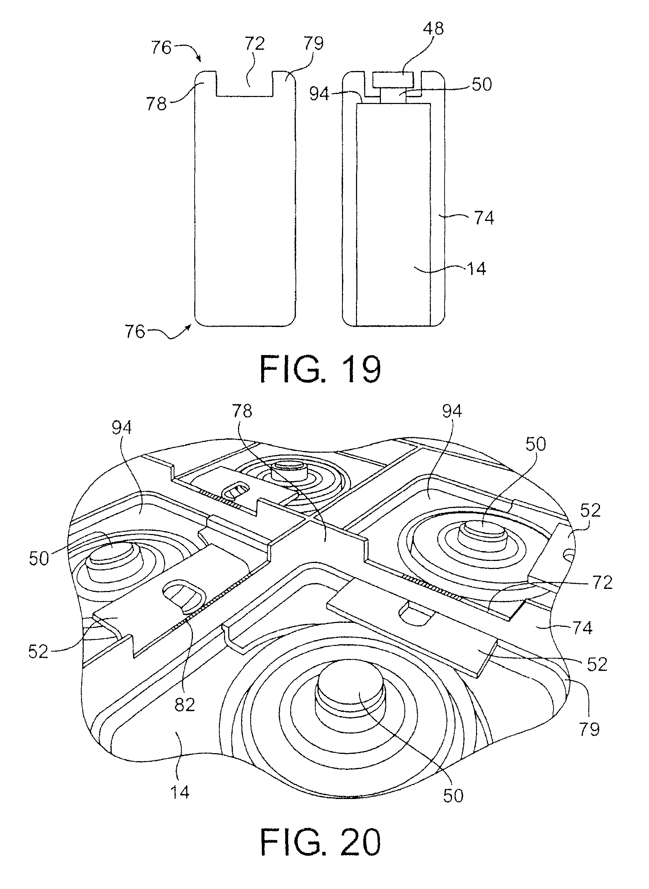

FIG. 19 illustrates one embodiment configured to reduce vibration and movement of cells, wherein extended length sheets 74 are used to insulate each cell 14 within an assembly. Each cell includes a terminal 50 that is mounted onto a face 94, wherein the terminal 50 accommodates a bus bar 48 that has a corresponding shape. In one embodiment, the terminal 50 has a circularly shaped profile wherein the bus bar 48 has a complimentary circular cutout that allows suitable seating onto the terminal. This arrangement accommodates a further operation to permanently couple the bus bar 48 to the terminal 50 such as via welding, brazing, and/or soldering. In this manner, cells 14 within a battery can be efficiently coupled together to meet desired power storage and delivery requirements.

In this embodiment, the extended length sheets 74 are substantially equivalent to the assembled height of the cell 14, bus bar 48 and terminal 50. For example, in one embodiment, the cell 14, bus bar 48, and terminal 50 define a long axis, and a long axis of the sheet 74 is substantially the same length as the long axis of the cell 14, bus bar 48, and terminal 50. According to one aspect, they may be the same length but for manufacturing variances. The extended length sheets 74 can be used as an alternative to standard length sheets 20, which can shift vertically by 2-3 mm or more due to a gap between the bus bar 48 and top of sheet 20. The gap in conventional designs allows bus bars 48 to be disposed between the terminals 50, 52 of each cell 14 without interference of the insulating sheets. The convenience facilitated by this gap, however, also allows for the standard length sheets 20 to vertically displace within the gap distance. Such movement can cause cracking or breakage of the standard length sheets 20, which can lead to inadequate insulation from cell-to-cell.

In one embodiment, the extended length sheets 74 are around 1.50 mm longer relative to a standard length sheet 20 discussed above. As this gap is substantially reduced or eliminated, vertical shift of extended length sheets 74 can be also be reduced (e.g., 0.5-1.5 mm) to provide greater structural stability. Additionally, use of the extended length sheets 74 can facilitate a larger creeper distance and allow for greater electric insulation margin relative to the top of the cell 14.

Extended length sheet 74 can be patterned and cut to create an application specific profile and/or geometry to provide insulation between cells within a battery. Suitable materials for use in fabricating the sheets can include mica. Other suitable materials may include ceramic, thermoset materials, and the like. Other substitutes may include glass, acrylate polymers, cellulose acetate, fiberglass, nylon, phenolic, polycarbonate, polyester, styrene, polyvinyl chloride, silicone, melamine and vulcanized fiber. Alternatively or in addition, the extended length sheet can be include a sprayed (or otherwise applied) coating to enhance insulation such as a plasma alumina, zirconia, ceramic paint, and the like. These materials may be foamed, filled, neat or composites of multiple materials. The composites may be laminate, and may include portions that are matted or woven.

In one embodiment, the extended length sheet 74 includes one or more features that can be adapted to suit different adjacent structural elements, channel sizes, shapes, and/or configurations. For instance, rounded corners 76 allow a robot or other mechanical device to pick-and-place the sheet without breaking off corners or damaging other components during insertion. Moreover, rounded corners 76 simplify placement of the sheets 74 in areas of low tolerance such as during assembly of a battery. The corners 76 can have different size and shapes to accommodate design constraints while also providing maximum possible insulation for each cell. For example, the corners can have a chamfered or irregular geometric profile to accommodate particular design constraints and/or structures within a battery. Such profile design can also be selected to facilitate pick-and-place mechanical or human assembly.

In one embodiment, the extended length sheet 74 includes a notch 72 that is disposed at an end or edge of the sheet 74 between fingers 78 and 79. The notch 72 may be commensurate with the size of the bus bar 48 that interconnects the terminal of a first cell (e.g., terminal 50) to the terminal of a second cell (e.g., terminal 52). As the cells are usually connected in a serial circuit configuration, bus bars are commonly employed on two of four sides for each cell: an input from a one adjacent cell and an output to another adjacent cell. In such a configuration, two sheets 74 surrounding the cell 14 include the notch 72 and two sheets do not. In other embodiments, only a single extended length sheet will include a notch as that battery may be disposed at an entry or exit point within the cell array. By disposing notched, extended length sheets 74 relative to the cell(s), efficient and accurate bus bar placement can be facilitated to interconnect one cell to another.

A notch may accommodate various sizes of bus bars. The height and width of the notch can be modified as necessary to allow placement of bus bars with a predetermined tolerance between the bus bar and inside surface(s) of the fingers. One or more sides can have a particular desired profile and/or have an angle corresponding to various mechanical requirements of the battery design. In addition, the width of the fingers 78 and 79 can vary to accommodate non-centered placement of the bus bar 48 to interconnect terminals from one cell to another. In this manner, a particular tolerance can be provided to facilitate connectivity of the bus bar 48 while at the same time minimizing displacement of each cell within respective compartments created by the extended length sheets 74.

FIG. 20 illustrates a battery at a particular production stage, wherein cells are disposed in a desired configuration within an inner housing (not shown in this view, but similar to housing 22 in FIG. 6). As shown, each cell includes a first terminal 50 centrally located on top of each cell and a second terminal 52 adjacent one side. In a desired placement, the second terminal 52 is disposed next to an extended length sheet 74 that includes a notch 72 to allow the bus bar 48 to be placed and interconnect the first terminal 50 and the second terminal 52 of respective cells. To facilitate accurate and efficient battery assembly, an indicator 82 is placed on a notch surface and/or adjacent to the notch 72. The indicator can be painted, marked, or otherwise distinguished to make the notch 72 conspicuous to an assembly technician, vision system, or other production tool. The indicator can be a visual indicator that is noticeable only under particular conditions. Such conditions can include illumination by a wavelength of light, heating to a temperature threshold, exposure to magnetic flux, or other circumstances.

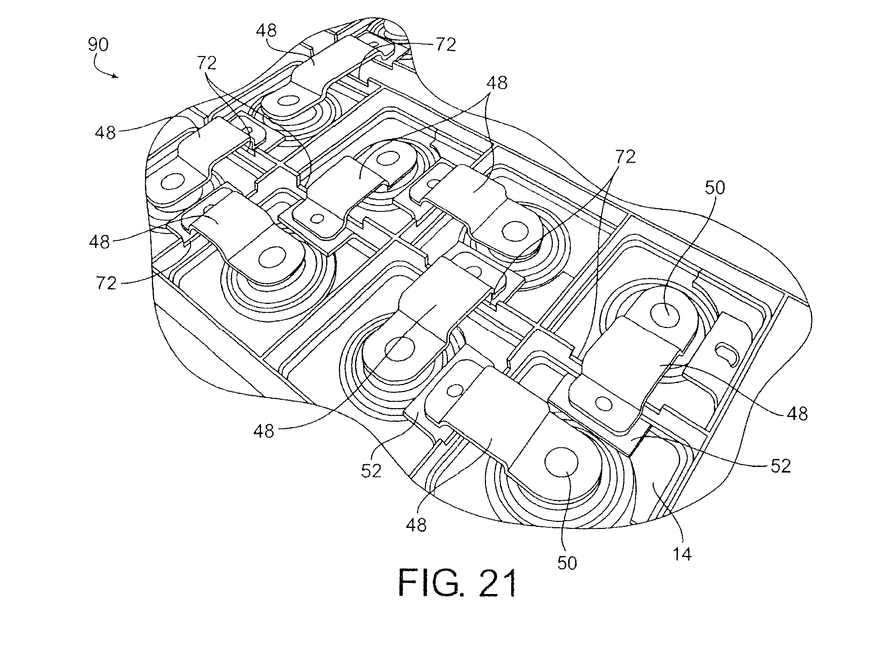

FIG. 21 illustrates a battery assembly 90 at a production stage subsequent to that depicted in FIG. 20. As shown in several locations, bus bars 48 are placed across respective notches to interconnect a terminal 50 of a first cell to a terminal 52 of a second cell using indicator 82. In this manner, a battery can be assembled in accordance with a circuit design to facilitate desired current flow. This process can be performed at an efficient pace as an operator can key solely off the indicator without examining the entire assembly 90 to verify each connection in a stepwise fashion. Such designation reduces error within the assembly process to ensure that quality standards are consistently met or exceeded.

Once the bus bars have been placed appropriately within the assembly, brazing, soldering, welding, or another process can be employed to couple the bus bars to respective terminals 50, 52. Such coupling can be accomplished in a single operation once all bus bars are placed appropriately throughout the battery to couple the cells to one another. In this manner, by utilizing the notches within each extended length sheet 74, a bus bar 48 can be disposed in a single, proper orientation unless an operator crushes or otherwise damages the extended length sheet 74. Such damage will serve as an inherent alert that bus bar placement is incorrect and that corrective action needs to be taken.

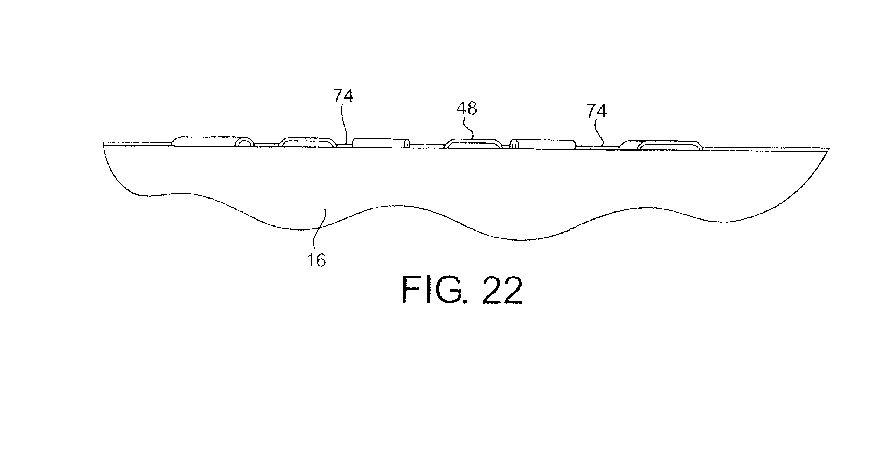

FIG. 22 shows a side elevation view of a completed assembly 90 to illustrate inner housing, outer housing, cooling plate 16, and extended length sheets 74 are substantially equivalent in height. As a top plate is placed on the edge of these components, the homogenous height insures there is a minimal amount of vertical displacement that can occur for each cell and extended length sheets 74 within the assembly 90.

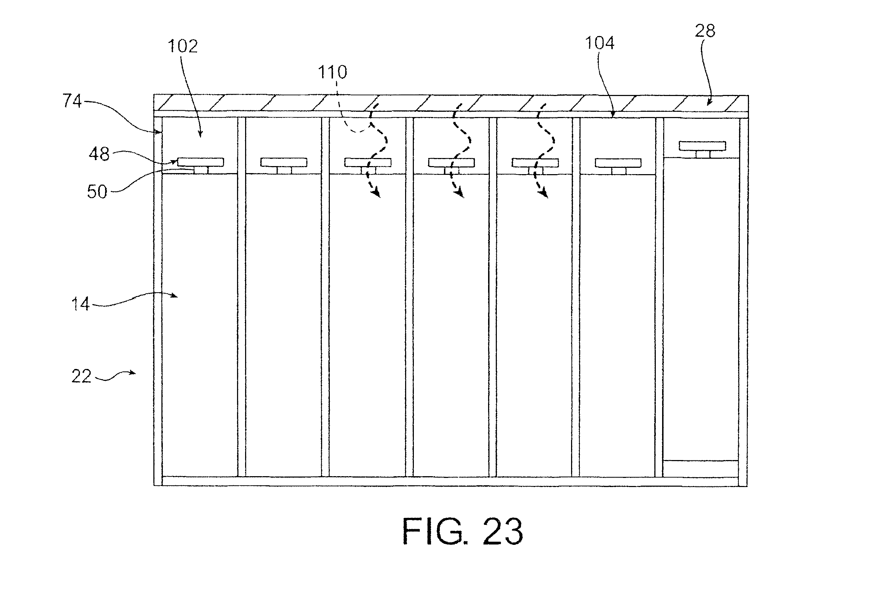

FIG. 23 illustrates a side profile of the inner housing 22, which has an interior surface that defines a volume having a height. In this embodiment, the extended length sheets 74 are substantially equivalent to the height of the volume of the inner housing 22, wherein the cells 14 are relatively shorter than the height of the inner housing 22 volume. In one configuration, the inner housing (and associated battery assembly) has an operating orientation that is up, which correlates with the heater and top mica layer 104 located opposite a surface to support the battery assembly, such as a shelf or bracket.

As a result of the disparity in height between the extended length sheets and the cells, a cooling channel 102 is created, which facilitates convective heat transfer 110 from heater 28 through top mica layer 104 down to the cells 14. In this configuration, the extended length sheets 74 not only provide electrical insulation between cells 14 but also provide structural support for top sheet 104 that is disposed between heater 28 and cells 14. The embodiment depicted in FIG. 23 is used in stationary electrochemical devices as cell movement may occur in the vertical direction toward the cooling channel 102.

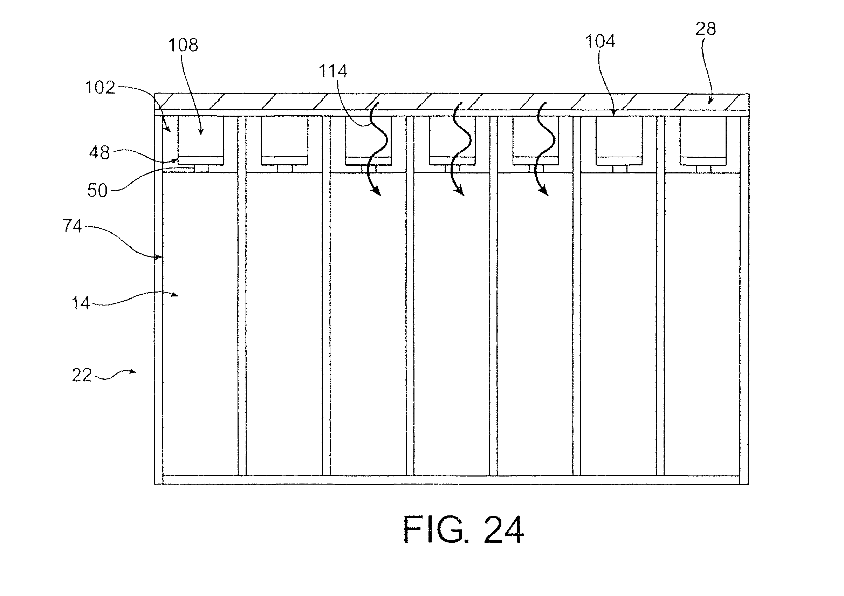

As shown in FIGS. 23 and 24, in an embodiment, to overcome potential vertical displacement, a plurality of support strips 108 are disposed within the cooling channel 102 to minimize the potential vertical displacement of cells 14. The use of support strips 108 can be employed to mitigate vertical displacement of cells 14 and potential damage thereof. In the embodiment shown, the support strips are made of mica and adhered to top sheet 104 via a glue, other adhesive, or other coupling agent. In one exemplary embodiment, the support strips 108 are disposed between corresponding bus bars 48 and the top sheet 104. The size of the support strips 108 can be selected to create an interference fit wherein a force is exerted down onto bus bar 48 to minimize movement of the cells 14. The support strips 108 can also facilitate both convective and conductive heat transfer from the heater 28 to the cells 14, wherein the cooling channel allows a cool air flow to remove heat from the cells 14.

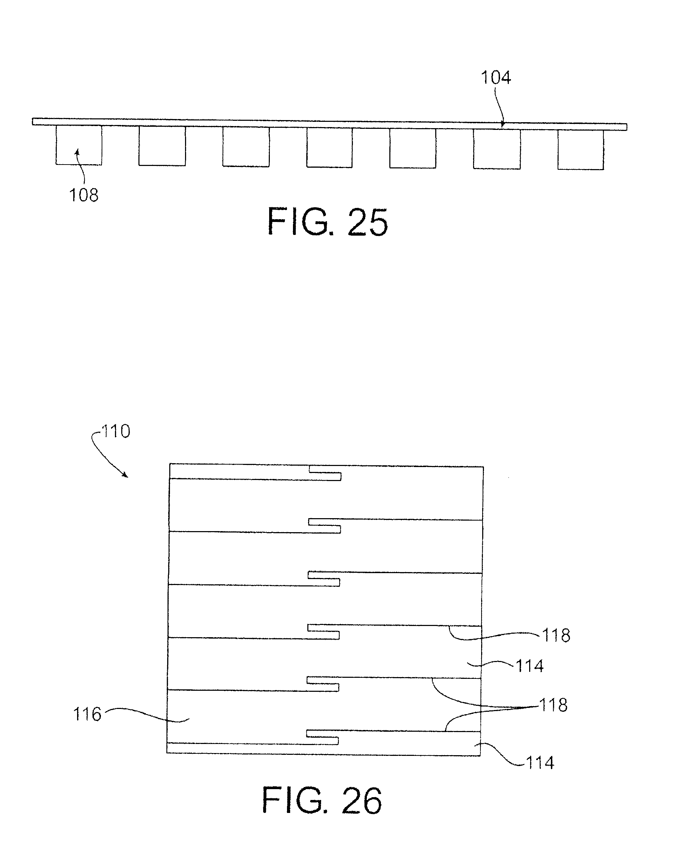

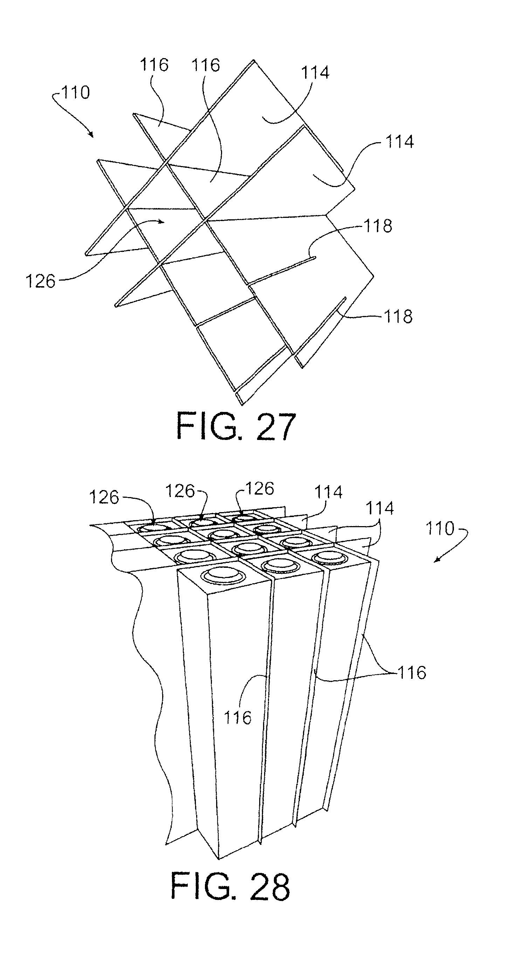

FIGS. 26-28 depict a folded egg crate sheet design 110 that is utilized to create compartments to accommodate a plurality of cells 14 within a battery. In this embodiment, the structure of the compartments is designed to facilitate compact storage and efficient assembly of batteries. FIG. 26 illustrates the egg crate design, wherein walls 114 and 116 are interleaved via slots 118. Compartments 126 are created when the egg crate structure 110 is opened and walls 114 and 116 are orthogonally disposed, as shown in FIG. 27. In this manner, the extended length sheets 74 can be folded and stored in a flat configuration to minimize storage space prior to use. Compartments are fabricated by placement of walls 114, 116 within slots 118 that are disposed at regular intervals along the length of the each sheet.

To fabricate the egg crate structure, sheets 114 can be inverted and inserted into the appropriate slots 118 of sheets 116 to create a framework of compartments 126 that can be substantially any size. The framework can be placed within an inner housing of a battery relative to the number of cells 14 utilized therein. FIG. 28 illustrates the egg crate sheet design 110 with cells disposed within each compartment. In an alternative embodiment, notches are cut into appropriate locations with the mica egg crate sheets to facilitate a proper placement of bus bars 48 within each battery, as described above.

In an embodiment, an electrochemical device includes a first cell that has a first face and a cell height, and a second cell that includes a second face. A first terminal is disposed on the first face of the first cell, and a second terminal is disposed on the second face of the second cell. A bus bar has a bus bar height, and electrically couples the first terminal on the first cell to the second terminal on the second cell. A sheet is disposed between the first cell and the second cell and has at least a portion that has a height that is at least as high as the combined height of the cell height and the bus bar height. The sheet has an edge that defines a notch, wherein the width of the notch is greater than the width of the bus bar and the depth of the notch is greater than the bus bar height to accommodate the bus bar extending through the notch. In an embodiment, the notch is disposed in the edge and is spaced from corners of the sheet. The sheet has at least two fingers, and at least one finger on each side of the notch, and each of the at least one finger is at least a portion of the sheet that has a height that is at least as high as the combined height of the cell height and the bus bar height.

In an embodiment, an electrochemical device includes a first cell that has a first face and a cell height, and a second cell that includes a second face. A first terminal is disposed on the first face of the first cell, and a second terminal is disposed on the second face of the second cell. A bus bar has a bus bar height, and electrically couples the first terminal on the first cell to the second terminal on the second cell. A sheet is disposed between the first cell and the second cell and has at least a portion that has a height that is at least as high as the combined height of the cell height and the bus bar height. The sheet has an edge that defines a notch, wherein the width of the notch is greater than the width of the bus bar and the depth of the notch is greater than the bus bar height to accommodate the bus bar extending through the notch. The notch is disposed at the sheet edge and spaced from one corner of the sheet so as to be where another corner of the sheet would be if not for the location of the notch.

In an embodiment, an electrochemical device includes a first cell that has a first face and a cell height, and a second cell that includes a second face. A first terminal is disposed on the first face of the first cell, and a second terminal is disposed on the second face of the second cell. A bus bar has a bus bar height, and electrically couples the first terminal on the first cell to the second terminal on the second cell. A sheet is disposed between the first cell and the second cell and has at least a portion that has a height that is at least as high as the combined height of the cell height and the bus bar height. The notch is one of a plurality of notches defined by the sheet edge, which are disposed so as to be mirror images of each other.

In an embodiment, an electrochemical device includes a first cell that has a first face and a cell height, and a second cell that includes a second face. A first terminal is disposed on the first face of the first cell, and a second terminal is disposed on the second face of the second cell. A bus bar has a bus bar height, and electrically couples the first terminal on the first cell to the second terminal on the second cell. A sheet is disposed between the first cell and the second cell and has at least a portion that has a height that is at least as high as the combined height of the cell height and the bus bar height. The notch is one of a plurality of notches defined by the sheet edge, wherein only one of the plurality of notches supports an indicator. The bus bar is disposed across the notch that supports the indicator.

In an embodiment, an electrochemical device includes a first cell that has a first face and a cell height, and a second cell that includes a second face. A first terminal is disposed on the first face of the first cell, and a second terminal is disposed on the second face of the second cell. A bus bar has a bus bar height, and electrically couples the first terminal on the first cell to the second terminal on the second cell. A sheet is disposed between the first cell and the second cell and has at least a portion that has a height that is at least as high as the combined height of the cell height and the bus bar height. A portion of the sheet edge defines the notch supports an indicator. In an embodiment, the indicator is a visual indicator that is one or more of a paint, a marking, and/or an ink.

In an embodiment, an electrochemical device includes a first cell that has a first face and a cell height, and a second cell that includes a second face. A first terminal is disposed on the first face of the first cell, and a second terminal is disposed on the second face of the second cell. A bus bar has a bus bar height, and electrically couples the first terminal on the first cell to the second terminal on the second cell. A sheet is disposed between the first cell and the second cell and has at least a portion that has a height that is at least as high as the combined height of the cell height and the bus bar height. A portion of the sheet edge that defines the notch supports an indicator, wherein the indicator is conspicuous only when exposed to a determined environmental condition. The environmental condition is one of a temperature, magnetic flux, a wavelength of light, and/or an angle of observation.

In an embodiment, an electrochemical device includes a first cell that has a first face and a cell height, and a second cell that includes a second face. A first terminal is disposed on the first face of the first cell, and a second terminal is disposed on the second face of the second cell. A bus bar has a bus bar height, and electrically couples the first terminal on the first cell to the second terminal on the second cell. A sheet, made of mica, is disposed between the first cell and the second cell and has at least a portion that has a height that is at least as high as the combined height of the cell height and the bus bar height.

In an embodiment, a notched sheet is disposed between adjacent cells within a housing. A bus bar is placed through the notch to electrically couple the adjacent cells to each other. An indicator associated with the notch is sensed, wherein the sheet and the notch are aligned using the sensed indicator. As discussed herein, sensing an indicator can be accomplished using disparate systems and methods to identify the presence of a particular feature. In one example, the indicator is a particular color, which is identified when placed on the notch. Alternatively or in addition, the indicator is visible only when exposed to a particular bandwidth of light and/or a particular temperature range. In an embodiment, the indicator is a raised or other structural feature.

To sense the presence of absence of such indicators, a user may rely on their own vision with the naked eye or by using eyeglasses as suitable for this purpose. Sensing can also be accomplished by using vision systems, cameras, color sensors, displacement sensor, non-contact switches, through-beam sensor, or other optical sensor that can discriminate between presence and absence of an indicator. In one approach, a non-contact switch is positioned proximate to a staging area to identify structural anomalies (e.g., tab, bump, etc.) located on or near a notch location. In another example, a staging area location is lit with UV lighting (or other specific bandwidth) to expose indicators, if any, that are within a battery assembly. If such feature is identified, an operator can be notified by a specific output such as a light, buzzer, or similar notification means.

In an embodiment, a notched sheet is disposed between adjacent cells within a housing. A bus bar is placed through the notch to electrically couple the adjacent cells to each other. The notch defined by the sheet is marked with the indicator.

In an embodiment, an assembly for insulating cells within an electrochemical device includes a plurality of walls that each have a height that is greater than a height of the cells. Each wall defines a plurality of slots disposed at a determined interval along the length of the wall, wherein the interval is based at least in part on a width of the cells. Two or more of the plurality of walls are interlockable with each other by aligning and interlocking the slots of one of the two or more walls with another of the two or more walls. Each wall further defines a plurality of notches that are each configured to facilitate a pass through of a bus bar electrically coupling one of the cells to another of the cells. The plurality of notches include notches defined by one edge of a wall and notches defined by an opposing edge of the same wall. Interlocking the slots of the two or more walls will place notches on a slotted side of a wall proximate to notches on an unslotted side of another wall. Some of the notches are associated with an indicator, while other of the notches are not associated with an indicator to facilitate a determined electrical coupling arrangement of the plurality of cells using bus bars that extend only through notches that are associated with an indicator.

In an embodiment, an electrochemical device includes a first cell that has a first face and a cell height, and a second cell that includes a second face. A first terminal is disposed on the first face of the first cell, and a second terminal is disposed on the second face of the second cell. A bus bar has a bus bar height, and the bus bar electrically couples the first terminal on the first cell to the second terminal on the second cell. A sheet is disposed between the first cell and the second cell, and the sheet has at least a portion that has a height that is at least as high as a combined height of the cell height and the bus bar height. A button sheet has a plurality of buttons configured to support the first cell and the second cell, wherein beam sections are disposed between buttons on the button sheet. At least one fastener is disposed at a bottom portion of at least one cell and extends through the button sheet, the at least one fastener being configured to fasten the at least one cell to the button sheet. The at least one fastener is connected to the button sheet by a connection selected from the group consisting of a bolted connection, a riveted connection, a brazed connection, a welded connection, and combinations thereof.

In an embodiment, an assembly for insulating cells within an electrochemical device includes a plurality of walls that each have a height that is greater than a height of the cells. Each wall defines a plurality of slots disposed at a determined interval along the length of the wall, wherein the interval is based at least in part on a width of the cells. Two or more of the plurality of walls are interlockable with each other by aligning and interlocking the slots of one of the two or more walls with another of the two or more walls. The assembly further includes a button sheet having a plurality of buttons configured to support the plurality of cells. A plurality of cooling plates are provided adjacent the plurality of cells.

In another embodiment, an electrochemical device comprises a cell, a terminal, a bus bar, and a sheet (e.g., comprised of mica). The sheet is generally planar, and has a width and a height; the height defines a long axis of the sheet (the longest dimension of the sheet). The sheet has four edges: top and bottom edges (e.g., the top and bottom edges are parallel) that correspond to the width of the sheet, and first and second side edges (e.g., the first and second side edges are parallel) that correspond to the height and long axis of the sheet. The top edge of the sheet defines a notch; for example, the notch may comprise, in effect, a removed portion of what otherwise would be a generally rectangular body of the sheet. In embodiments, the notch is generally rectangular and thereby defined by a first side notch edge, a bottom notch edge, and a second side notch edge; the first and second side notch edges are generally parallel to the first and second side edges of the sheet, and the bottom notch edge is generally parallel to the bottom edge of the sheet. The first and second side notch edges may meet the bottom notch edge at right angles, or the junctions may be rounded. The cell has a long axis, which is disposed generally parallel to the long axis of the sheet. The terminal is coupled with a top of the cell (the top located at one end of the long axis of the cell), positioned proximate to the notch. The bus bar is attached to the terminal. A longitudinal axis of the bus bar is generally perpendicular to the long axes of the cell and sheet, and extends through the notch. The height of the sheet is substantially the same as the combined height of the cell long axis, terminal, and bus bar (the height of the bus bar defined as transverse to its longitudinal axis, i.e., according to one aspect, the height of the bus bar is its longest dimension extending in the direction of the axes of the cell and sheet.

In the appended claims, the terms "including," "includes," "has," and "having" are used as the plain-language equivalents of the term "comprising"; the term "in which" is equivalent to "wherein." Moreover, in the following claims, the terms "first," "second," "third," "upper," "lower," "bottom," "top," etc. are used merely as labels, and are not intended to impose numerical or positional requirements on their objects. Further, the limitations of the following claims are not written in means-plus-function format and are not intended to be interpreted based on 35 U.S.C. § 112, sixth paragraph, unless and until such claim limitations expressly use the phrase "means for" followed by a statement of function void of further structure. As used herein, an element or step recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property. Moreover, certain embodiments may be shown as having like or similar elements, however, this is merely for illustration purposes, and such embodiments need not necessarily have the same elements unless specified in the claims.

This written description uses examples to disclose the invention, including the best mode, and also to enable one of ordinary skill in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not different from the literal language of the claims, or if they include equivalent structural elements with insubstantial differences from the literal language of the claims.

Various aspects and embodiments of the present invention are defined by the following numbered clauses:
1. An electrochemical device, comprising:
   a first cell that has a first face and a cell height, and a second cell that includes a second face;
   a first terminal that is disposed on the first face of the first cell, and a second terminal that is disposed on the second face of the second cell;
   a bus bar that has a bus bar height, and that electrically couples the first terminal on the first cell to the second terminal on the second cell; and
   a sheet disposed between the first cell and the second cell, and the sheet has at least a portion that has a height that is at least as high as a combined height of the cell height and the bus bar height.
2. The electromechanical device according to clause 1, further comprising:
   a button sheet having a plurality of buttons configured to support the first cell and the second cell, wherein beam sections are disposed between buttons on the button sheet; and
   at least one fastener disposed at a bottom portion of at least one cell and extending through the button sheet, the at least one fastener being configured to fasten the at least one cell to the button sheet, wherein the at least one fastener is connected to the button sheet by a connection selected from the group consisting of a bolted connection, a riveted connection, a brazed connection, a welded connection, and combinations thereof.
3. The electrochemical device according to clause 1 or clause 2, wherein the sheet has an edge that defines a notch, wherein a width of the notch is greater than a width of the bus bar and a depth of the notch is greater than the bus bar height to accommodate the bus bar extending through the notch.
4. The electrochemical device according to any preceding clause, wherein the notch is disposed at the sheet edge and is spaced from corners of the sheet.
5. The electrochemical device according to any preceding clause, wherein the sheet has at least two fingers, and at least one finger on each side of the notch, and each of the at least one finger comprises at least a portion of the sheet that has a height that is at least as high as the combined height of the cell height and the bus bar height.
6. The electrochemical device according to any preceding clause, wherein the notch is disposed at the sheet edge and is spaced from one corner of the sheet so as to be where another corner of the sheet would be if not for the location of the notch.
7. The electrochemical device according to any preceding clause, wherein the notch is one of a plurality of notches defined by the sheet edge.
8. The electrochemical device according to any preceding clause, wherein the plurality of notches are disposed so as to be mirror images of each other.
9. The electrochemical device according to any preceding clause, further comprising an indicator, wherein one, and only one, of the plurality of notches supports the indicator.
10. The electrochemical device according to any preceding clause, wherein the bus bar is disposed across the notch that supports the indicator.
11. The electrochemical device according to any preceding clause, wherein a portion of the sheet edge that defines the notch supports an indicator.
12. The electrochemical device according to any preceding clause, wherein the indicator is a visual indicator comprising one or more of a physical feature, a paint, a marking, or an ink.
13. The electrochemical device according to any preceding clause, wherein the indicator is observable only when exposed to a determined environmental condition.
14. The electrochemical device according any preceding clause, wherein the environmental condition is one of a temperature, magnetic flux, a wavelength of light, or an angle of observation.
15. The electrochemical device according to any preceding clause, wherein the sheet is comprised of mica.
16. The electromechanical device according to any preceding clause, wherein the sheet is coated with one or more of an alumina, a zirconia, and a ceramic material.
17. The electromechanical device according to any preceding clause, further comprising:
   a heater located proximate to at least the first cell and second cell that raises temperature of the electrochemical device to a desired operating level.
18. The electromechanical device according to any preceding clause, further comprising:
   a channel defined as a gap between the top of the sheet and combined height of the top of the cell height and the bus bar height, wherein the sheet facilitates heat transfer from the heater to at least the first cell and the second cell.
19. The electromechanical device according to any preceding clause, wherein the sheet has corners that are rounded or chamfered.
20. A method, comprising:
   disposing a sheet between adjacent cells within a housing, wherein the sheet has a notch; and
   placing a bus bar through the notch to electrically couple the adjacent cells to each other.
21. The method according to any preceding clause, further comprising sensing an indicator associated with the notch, and aligning the sheet and the notch using the sensed indicator.
22. The method according to any preceding clause, further comprising marking the notch defined by the sheet with the indicator.
23. An assembly for insulating cells within an electrochemical device, comprising:
   a plurality of walls that each have a height that is greater than a height of the cells, and each wall defines a plurality of slots disposed at a determined interval along the length of the wall, wherein the interval is based at least in part on a width of the cells, and two or more of the plurality of walls are interlockable with each other by aligning and interlocking the slots of one of the two or more walls with another of the two or more walls.
24. The assembly according to any preceding clause, wherein each wall further defines a plurality of notches that are each configured to facilitate a pass through of a bus bar electrically coupling one of the cells to another of the cells, and the plurality of notches include notches defined by one edge of the wall and notches defined by an opposing edge of the same wall, and whereby interlocking the slots of the two or more walls will place notches on a slotted side of a wall proximate to notches on an unslotted side of another wall.
25. The assembly according to any preceding clause, wherein some of the notches are associated with an indicator, while other of the notches are not associated with an indicator, and thereby to facilitate a determined electrical coupling arrangement of the plurality of cells using bus bars that extend only through notches that are associated with an indicator.
26. The assembly according to any preceding clause, further comprising:
   a button sheet having a plurality of buttons configured to support the plurality of cells; and
   a plurality of cooling plates provided adjacent the plurality of cells.

## Claims

1. An electrochemical device (19), comprising:
a first cell (14) that has a first face (94) and a cell height, and a second cell (14) that includes a second face (94);
a first terminal (50) that is disposed on the first face (94) of the first cell (14), and a second terminal (52) that is disposed on the second face (94) of the second cell (14);
a bus bar (48) that has a bus bar height, and that electrically couples the first terminal (50) on the first cell (14) to the second terminal (52) on the second cell (14); and
a sheet (74) disposed between the first cell (14) and the second cell (14), and the sheet (14) has at least a portion that has a height that is at least as high as a combined height of the cell (14) height and the bus bar (48) height.

2. The electromechanical device (19) according to claim 1, further comprising:
a button sheet (12) having a plurality of buttons (13) configured to support the first cell (14) and the second cell (14), wherein beam sections (36) are disposed between buttons (13) on the button sheet (12); and
at least one fastener (60) disposed at a bottom portion of at least one cell (14) and extending through the button sheet (12), the at least one fastener (60) being configured to fasten the at least one cell (14) to the button sheet (12), wherein the at least one fastener (60) is connected to the button sheet (12) by a connection selected from the group consisting of a bolted connection, a riveted connection, a brazed connection, a welded connection, and combinations thereof.

3. The electrochemical device (19) according to claim 1 or claim 2, wherein the sheet has an edge that defines a notch (72), wherein a width of the notch (72) is greater than a width of the bus bar (48) and a depth of the notch (72) is greater than the bus bar (48) height to accommodate the bus bar (48) extending through the notch (72).

4. The electrochemical device (19) according to any preceding claim, wherein the notch (72) is disposed at the sheet edge and is spaced from corners of the sheet (74).

5. The electrochemical device (19) according to any preceding claim, wherein the sheet has at least two fingers (78,79), and at least one finger (78,79) on each side of the notch (72), and each of the at least one finger (78,79) comprises at least a portion of the sheet (74) that has a height that is at least as high as the combined height of the cell (14) height and the bus bar (48) height.

6. The electrochemical device (19) according to any preceding claim, wherein the notch (72) is disposed at the sheet edge and is spaced from one corner of the sheet (74) so as to be where another corner of the sheet would be if not for the location of the notch (72).

7. The electrochemical device (19) according to any preceding claim, wherein the notch (72) is one of a plurality of notches defined by the sheet edge.

8. The electrochemical device (19) according to any preceding claim, wherein a portion of the sheet edge that defines the notch (72) supports an indicator (82).

9. The electrochemical device (19) according to any preceding claim wherein a bus bar (48) is disposed across the notch (72) that supports the indicator (82).

10. A method, comprising:
disposing a sheet (74) between adjacent cells (14) within a housing (22,24), wherein the sheet has a notch (72); and
placing a bus bar (48) through the notch (72) to electrically couple the adjacent cells (14) to each other.

11. The method according to claim 10, further comprising sensing an indicator (82) associated with the notch (72), and aligning the sheet (74) and the notch (72) using the sensed indicator (82).

12. An assembly (90) for insulating cells (14) within an electrochemical device (19), comprising:
a plurality of walls (114,116) that each have a height that is greater than a height of the cells (14), and each wall (114,116) defines a plurality of slots (118) disposed at a determined interval along the length of the wall (114,116), wherein the interval is based at least in part on a width of the cells (14), and two or more of the plurality of walls (114,116) are interlockable with each other by aligning and interlocking the slots (118) of one of the two or more walls (114,116) with another of the two or more walls (114,116).

13. The assembly according to claim 12, wherein each wall further defines a plurality of notches that are each configured to facilitate a pass through of a bus bar electrically coupling one of the cells to another of the cells, and the plurality of notches include notches defined by one edge of the wall and notches defined by an opposing edge of the same wall, and whereby interlocking the slots of the two or more walls will place notches on a slotted side of a wall proximate to notches on an unslotted side of another wall.

14. The assembly according to claim 12 or claim 13, wherein some of the notches are associated with an indicator, while other of the notches are not associated with an indicator, and thereby to facilitate a determined electrical coupling arrangement of the plurality of cells using bus bars that extend only through notches that are associated with an indicator.

15. The assembly (90) according to any of claims 12 to 14, further comprising:
a button sheet (12) having a plurality of buttons (13) configured to support the plurality of cells (14); and
a plurality of cooling plates (18) provided adjacent the plurality of cells (14).
